# EUROPEAN PATENT APPLICATION

(11) **EP 1 577 278 A1**
(43) Date of publication of application: **21.09.2005**
(21) Application number: 05005596.1
(22) Date of filing: 15.03.2005
(51) Int. Cl.: C04B 35/468, H01G 4/12, H01G 4/30

(54) **Dielectric ceramic composition, multilayer ceramic capcitor and method for manufacturing the same**

(30) Priority: 16.03.2004 JP 2004073856; 26.03.2004 JP 2004091221
(71) Applicant: TDK Corporation, Tokyo 103-8272 (JP)
(72) Inventor: Iguchi, Toshihiro, Tokyo 103-8272 (JP); Hara, Haruya, Tokyo 103-8272 (JP); Ito, Kazushige, Tokyo 103-8272 (JP); Sato, Akira, Tokyo 103-8272 (JP); Sato, Shigeki, Tokyo 103-8272 (JP); Kojima, Takashi, Tokyo 103-8272 (JP)
(74) Representative: Klunker . Schmitt-Nilson . Hirsch

(57) **Abstract**

A dielectric ceramic composition contains components, with respective numbers of moles relative to 100 moles of barium titanate, including barium titanate, a first sub-component containing at least one oxide selected from a Mg oxide, a Ca oxide, a Ba oxide, and Sr oxide, a second sub-component containing an oxide containing 1 mol of Si atoms per mol, a third sub-component containing at least one oxide selected from a V oxide, a Mo oxide, and a W oxide, a fourth sub-component containing at least one R¹ oxide (wherein R¹ is at least one selected from Sc, Er, Tm, Yb, and Lu), a fifth sub-component containing at least one R² oxide (wherein R² is at least one selected from Y, Dy, Ho, Tb, Gd, and Eu), a sixth sub-component containing at least one selected from a Mn oxide and a Cr oxide, and a seventh sub-component containing at least one selected from calcium zirconate and a mixture of a Ca oxide and Zr oxide. The ratio (A/B) of the number of moles A of the second sub-component to the total number of moles B of the fourth and fifth sub-components is 0.7 or more. Alternatively, the ratio (C/D) of the number of moles C of Si atoms in the second sub-component to the total number of moles of the atoms in the first to seventh sub-components excluding the Si atoms and oxygen atoms being 0.2 or more, and the total number of moles of the fourth and fifth sub-components being 3 or more.

## Description

### BACKGROUND OF THE INVENTION

### 1. Field of the Invention

The present invention relates to a dielectric ceramic composition, a multilayer ceramic capacitor, and a method for manufacturing the same. More specifically, the present invention relates to a dielectric ceramic composition and a multilayer ceramic capacitor having a long mean time to failure (MTTF) and satisfactory X8R characteristic.

### 2. Description of the Related Art

Multilayer ceramic capacitors are widely used as small, large-capacity electronic components having high reliability. In recent years, demands for multilayer ceramic capacitors to have smaller sizes, lower cost, and higher capacity and reliability have become more and more strict with miniaturization and advancement of performance of apparatuses.

A multilayer ceramic capacitor is generally manufactured by stacking internal electrode layers and dielectric layers using a paste for internal electrode layers and a paste for dielectric layers, respectively, by a sheet method, a printing method, or the like to form a laminate, and then simultaneously firing the internal electrode layers and the dielectric layers in the laminate.

Although Pd or a Pd alloy is generally used as a conductive material for the internal electrode layers, a base metal such as relatively inexpensive Ni or a Ni alloy is increasingly used because Pd is expensive. When a base metal is used as a conductive material for the internal electrode layers, the internal electrode layers are oxidized by firing in air. Therefore, the dielectric layers and the internal electrode layers must be simultaneously fired in a reducing atmosphere. However, the dielectric layers are reduced by firing in the reducing atmosphere to decrease the resistivity. Therefore, an irreducible dielectric material has been developed.

However, a multilayer ceramic capacitor using an irreducible dielectric material has the problem that the insulation resistance (IR) is significantly decreased by application of an electric field (i.e., short IR life), and the reliability is low. It is thus demanded to solve the problem.

Furthermore, a capacitor is also required to have excellent temperature characteristics, and particularly the temperature characteristics are required to be flat under severe conditions according to applications. In recent, a multilayer ceramic capacitor has been used in various electronic apparatuses such as an engine electron control unit (ECU) mounted in an automobile engine room, a crank angle sensor, an antilock brake system (ABS) module, and the like. These electronic apparatuses are adapted for stable engine control, drive control, and brake control, and thus the circuits thereof are required to have high temperature stability.

The electronic apparatuses are used in an environment in which the temperature in a cold district is estimated to decrease to about -20°C or less in winter, and the temperature after the start of an engine is estimated to increase to about +130°C in summer. There has recently been a tendency to omit a wire harness for connecting an electronic apparatus and an apparatus to be controlled. In some cases, therefore, an electronic apparatus is installed outside a car, and the environment of the electronic apparatus becomes more and more severe. Therefore, a capacitor used for the electronic apparatuses is required to have flat temperature characteristics over a wide temperature range.

A composition known as a dielectric ceramic composition having a high dielectric constant and flat capacitance-temperature characteristics contains BaTiO₃ as a main component and Nb₂O₅-Co₃O₄, MgO-Y, a rare earth element (Dy, Ho, or the like), Bi₂O₃-TiO₂, and the like. However, such a BaTiO₃-based high dielectric constant material cannot satisfy the X7R characteristic (ΔC/C = ±15% at -55°C to 125°C) stipulated in the EIA standard, and thus the material cannot be applied to an automobile electronic apparatus used in the above-described severe environment. A dielectric ceramic composition satisfying the X8R characteristic (ΔC/C = ±15% at -55°C to 150°C) stipulated in the EIA standard is required for the above-described electronic apparatus.

The applicant has previously proposed a dielectric ceramic composition which has a high dielectric constant, satisfies the X8R characteristic, and permits firing in a reducing atmosphere, and which will be described below (refer to, for example, Japanese Patent Nos. 3,348,081 and 3, 341, 003) .

Japanese Patent No. 3,348,081 discloses a dielectric ceramic composition prepared from a raw material containing at least a main component comprising barium titanate, a first sub-component comprising at least one selected from MgO, CaO, BaO, SrO, and Cr₂O₃, a second sub-component mainly comprising silicon oxide, a third sub-component comprising at least one selected from V₂O₅, MoO₃, and WO₃, and a fourth sub-component comprising an R¹ oxide (wherein R¹ is at least one selected from Sc, Er, Tm, Yb, and Lu), and a fifth sub-component comprising CaZrO₃ or CaO+ZrO₂. The ratios of the respective components to 100 moles of the main component are: the first sub-component, 0.1 to 3 moles; the second sub-component, 2 to 10 moles; the third sub-component, 0.01 to 0.5 mole; the fourth sub-component, 0.5 to 7 moles (in terms of R¹); and the fifth sub-component, 0 < fifth sub-component ≤ 5 moles.

Japanese Patent No. 3,341,003 discloses a dielectric ceramic composition prepared from a raw material comprising at least a main component comprising barium titanate, a first sub-component comprising an AE oxide (wherein AE is at least one selected from Mg, Ca, Ba, and Sr), and a second sub-component comprising an R oxide (wherein R is at least one selected from Y, Dy, Ho, and Er). The ratios of the respective components to 100 moles of the main component are: the first sub-component, 0 < first sub-component < 0.1 mole; and the second sub-component, 1 mole < second sub-component < 7 moles.

The dielectric ceramic compositions disclosed in Japanese Patent Nos. 3,348,081 and 3,341,003 have a high dielectric constant and capacitance-temperature characteristics satisfying the X8R characteristic (ΔC/C = ±15% at -55°C to 150°C) stipulated in the EIA standard, and can be fired in a reducing atmosphere because Pb, Bi, Zn, and the like are not contained. However, the dielectric ceramic compositions disclosed in Japanese Patent Nos. 3,348,081 and 3,341,003 do not necessarily show a satisfactorily long mean time to failure when a dielectric layer is thinned for further miniaturizing a multilayer ceramic capacitor and increasing the capacitance. The compositions are also disadvantageous in that a dielectric ceramic composition exhibiting a small variation in means time to failure cannot be easily produced.

### SUMMARY OF THE INVENTION

The present invention has been achieved for solving the above-described problems. A first object of the present invention is to provide a dielectric ceramic composition and a multilayer ceramic capacitor comprising the dielectric ceramic composition which has a long mean time to failure and capacitance-temperature characteristics satisfying the X8R characteristic stipulated in the EIA standard when a dielectric layer is further thinned for decreasing a size and increasing capacitance.

A second object of the present invention is to provide a dielectric ceramic composition and a multilayer ceramic capacitor comprising the dielectric ceramic composition which has a long mean time to failure and a small variation in lifetime, and capacitance-temperature characteristics satisfying the X8R characteristic stipulated in the EIA standard.

A third object of the present invention is to provide a method for manufacturing the multilayer ceramic capacitor.

A fourth object of the present invention is to provide a raw material used for preparing the dielectric ceramic composition.

In order to achieve the first to fourth objects, a dielectric ceramic composition of the present invention comprises basic components, with respective numbers of moles relative to 100 moles of barium titanate, including (a) barium titanate, (b) a first sub-component comprising at least one selected from a Mg oxide, a Ca oxide, a Ba oxide, and Sr oxide with a number of moles of 0 to 7 in terms of MgO, CaO, BaO, and SrO, respectively, (c) a second sub-component comprising an oxide containing 1 mol of Si atoms per mol with a number of moles of 0.5 to 12 in terms of the oxide, (d) a third sub-component comprising at least one selected from a V oxide, a Mo oxide, and a W oxide with a number of moles of 0.01 to 0.5 in terms of V₂O₅, MoO₃, WO₃, respectively, (e) a fourth sub-component comprising at least one R¹ oxide (wherein R¹ is at least one selected from Sc, Er, Tm, Yb, and Lu) with a number of moles of 0 to 7 in terms of R¹₂O₃, (f) a fifth sub-component comprising at least one R² oxide (wherein R² is at least one selected from Y, Dy, Ho, Tb, Gd, and Eu) with a number of moles of 0.5 to 9 in terms of R²₂O₃, (g) a sixth sub-component comprising at least one selected from a Mn oxide and a Cr oxide with a number of moles of 0 to 0.5 in terms of MnO and Cr₂O₃, respectively, and (h) a seventh sub-component comprising at least one selected from calcium zirconate and a mixture of a Ca oxide and Zr oxide with a number of moles of 0 to 5 in terms of CaZrO₃ and CaO+ZrO₂, respectively.

A dielectric ceramic composition and a multilayer ceramic capacitor including a dielectric layer comprising the dielectric ceramic composition of the present invention contain the above-described basic components, and the characteristics thereof, such as the X8R characteristic, mean time to failure, variation in lifetime, and the like, can be improved by controlling the composition of the basic components.

In order to achieve the first object, a dielectric ceramic composition (referred to as a "dielectric ceramic composition I" hereinafter) of the present invention comprises the above-described basic components, wherein the ratio (A/B) of the number of moles A of the second sub-component to the total number of moles B of the fourth and fifth sub-components is 0.7 or more.

In the barium titanate-based dielectric ceramic composition I containing the above-described sub-components, when the ratio (A/B) of the number of moles A of the second sub-component to the total number of moles B of the fourth and fifth sub-components is 0.7 or more, the X8R characteristic is satisfied, and the mean time to failure is long. In a conventional barium titanate-based dielectric ceramic composition, when an electric field is applied, oxygen defects present in a dielectric material move to break down the insulation of the dielectric material. Therefore, rare earth elements (R¹ atoms and R² atoms) functioning as a donor are added for preventing the movement of the oxygen defects. Although the addition of the rare earth element increases the time to breakdown of insulation, the addition of a large amount of rare earth elements may cause half-baking and may in turn decrease the lifetime. In the present invention, in order to prevent this problem, the ratio of the second sub-component functioning as a sintering aid to the total of the fourth and fifth sub-components comprising rare earth elements functioning as a donor is controlled in the above-described range, thereby producing the dielectric ceramic composition 1 having a long mean time to failure.

In the dielectric ceramic composition I of the present invention, preferably, the second sub-component is a compound oxide represented by (Ba, Ca)ₓSi₂₊ₓ, and the number of moles of the compound oxide is 2 to 10.

A multilayer ceramic capacitor (referred to as a "multilayer ceramic capacitor I" hereinafter) of the present invention comprises a laminate of dielectric layers comprising the dielectric ceramic composition I of the present invention and internal electrode layers, the layers being alternately stacked.

The multilayer ceramic capacitor I of the present invention comprising the laminate the dielectric layers comprising the dielectric ceramic composition I of the present invention and the internal electrode layers, the layers being alternately stacked, satisfies the X8R characteristic and has a long mean time to failure.

In order to achieve the second object, a dielectric ceramic composition (referred to as a "dielectric ceramic composition II" hereinafter) of the present invention comprises the above-described basic components, wherein the ratio (C/D) of the number of moles C of the Si atoms in the second sub-component to the total number of moles D of the atoms in the first to the seventh sub-components excluding the Si atoms and oxygen atoms is 0.2 or more, and the total number of moles of the fourth and fifth sub-components is 3 or more.

In the barium titanate-based dielectric ceramic composition II containing the above-described sub-components according to the present invention, when the ratio (C/D) of the number of moles C of the Si atoms in the second sub-component to the total number of moles D of the atoms in the first to the seventh sub-components excluding the Si atoms and oxygen atoms is 0.2 or more, and the total number of moles of the fourth and fifth sub-components is 3 or more, the X8R characteristic is satisfied, and the mean time to failure is long. This is possibly because the fourth and fifth sub-components function as donor components for preventing movement of oxygen defects, and the C/D ratio is set to 0.2 or more to increase the amount of Si functioning as a grain boundary component, thereby increasing the electric field applied to grain boundaries and avoiding application of the electric field to the insides of grains.

In the dielectric ceramic composition II of the present invention, the ratio (C/D) of the number of moles C of the Si atoms in the second sub-component to the total number of moles D of the atoms in the first to the seventh sub-components excluding the Si atoms and oxygen atoms is preferably 0.2 or more and less than 0.24. In addition to the above-described effect, the dielectric ceramic composition II of the present invention has the effect that a segregation layer is little formed at a grain boundary triple point because the ratio C/D is less than 0.24, thereby decreasing the variation in lifetime.

A multilayer ceramic capacitor (referred to as a "multilayer ceramic capacitor II" hereinafter) of the present invention comprises a laminate of dielectric layers comprising the dielectric ceramic composition II of the present invention and internal electrode layers, the layers being alternately stacked.

The multilayer ceramic capacitor II of the present invention comprising the laminate of the dielectric layers comprising the dielectric ceramic composition II of the present invention and the internal electrode layers, the layers being alternately stacked, satisfies the X8R characteristic, and has a long mean time to failure and a small variation in lifetime.

In order to achieve the third object, a method for manufacturing the multilayer ceramic capacitor I of the present invention comprises a step of preparing a dielectric ceramic composition raw material I comprising basic components including (1) barium titanate and/or a compound or a mixture converted to barium titanate by firing, (2) a first sub-component comprising at least one oxide selected from MgO, CaO, BaO, and SrO and/or a compound converted to the oxide by firing, (3) a second sub-component comprising an oxide containing 1 mole of Si atoms per mole, (4) a third sub-component comprising at least one oxide selected from V₂O₅, MoO₃, WO₃ and/or a compound converted to the oxide by firing, (5) a fourth sub-component comprising at least one oxide represented by R¹₂O₃ (wherein R¹ is an element selected from Sc, Er, Tm, Yb, and Lu) and/or a compound converted to the oxide by firing, (6) a fifth sub-component comprising at least one oxide represented by R²₂O₃ (wherein R² is at least one selected from Y, Dy, Ho, Tb, Gd, and Eu) and/or a compound converted to the oxide by firing, (7) a sixth sub-component comprising at least one oxide selected from MnO and Cr₂O₃ and/or a compound converted to the oxide by firing, and (8) a seventh sub-component comprising at least one compound selected from CaZrO₃, a mixture of CaO and ZrO₂, a compound converted to CaZrO₃ by firing, and a mixture of compounds converted to CaO and ZrO₂, respectively, by firing, the numbers of moles of the first, second, third, fourth, fifth, sixth, and seventh sub-components relative to 100 moles of the barium titanate being 0 to 7, 0.5 to 12, 0.01 to 0.5, 0 to 7, 0.5 to 9, 0 to 0.5, and 0 to 5, respectively, in terms of the respective oxides, and the ratio (A/B) of the number of moles A of the second sub-component to the total number of moles B of the fourth and fifth sub-components being 0.7 or more; a step of firing a laminate produced by alternately stacking green sheets for forming dielectric layers and paste layers for forming internal electrode layers, the green sheets being formed using the dielectric ceramic composition raw material I, to form a ceramic chip in which the green sheets become the dielectric layers and the paste layers become the internal electrode layers; and a step of re-oxidizing the dielectric layers in the ceramic chip.

In the present invention, the dielectric ceramic composition raw material I is prepared, in which the ratio (A/B) of the number of moles A of the second sub-component functioning as a sintering aid to the total number of moles B of the fourth and fifth sub-components comprising rare earth elements functioning as donors is 0.7 or more. Therefore, the multilayer ceramic capacitor produced using the raw material I satisfies the X8R characteristic and has a long mean time to failure.

In the method for manufacturing the multilayer ceramic capacitor I of the present invention, preferably, the second sub-component is a compound oxide represented by (Ba, Ca)ₓSiO₂₊ₓ, and has a number of moles of 2 to 10 .

In order to achieve the third object, a method for manufacturing the multilayer ceramic capacitor II of the present invention comprises a step of preparing a dielectric ceramic composition raw material II containing the same basic components as those of the dielectric ceramic composition raw material I for manufacturing the multilayer ceramic capacitor I, the ratio (C/D) of the number of moles C of Si atoms in the second sub-component to the total number of moles of the atoms in the first to seventh sub-components excluding the Si atoms and oxygen atoms being 0.2 or more, and the total number of moles of the fourth and fifth sub-components being 3 moles or more; a step of firing a laminate produced by alternately stacking green sheets for forming dielectric layers and paste layers for forming internal electrode layers, the green sheets being formed using the dielectric ceramic composition raw material II, to form a ceramic chip in which the green sheets become the dielectric layers and the paste layers become the internal electrode layers; and a step of re-oxidizing the dielectric layers in the ceramic chip.

The multilayer ceramic capacitor II manufactured using the raw material satisfies the X8R characteristic and has a long mean time to failure and a small variation in lifetime.

In order to achieve the fourth object, a dielectric ceramic composition raw material I of the present invention comprises basic components including (1) barium titanate and/or a compound or a mixture converted to barium titanate by firing, (2) a first sub-component comprising at least one oxide selected from MgO, CaO, BaO, and SrO and/or a compound converted to the oxide by firing, (3) a second sub-component comprising an oxide containing 1 mol of Si atoms per mol, (4) a third sub-component comprising at least one oxide selected from V₂O₅, MoO₃, WO₃ and/or a compound converted to the oxide by firing, (5) a fourth sub-component comprising at least one oxide represented by R¹₂O₃ (wherein R¹ is an element from Sc, Er, Tm, Yb, and Lu) and/or a compound converted to the oxide by firing, (6) a fifth sub-component comprising at least one oxide represented by R²₂O₃ (wherein R² is at least one selected from Y, Dy, Ho, Tb, Gd, and Eu) and/or a compound converted to the oxide by firing, (7) a sixth sub-component comprising at least one oxide selected from MnO and Cr₂O₃ and/or a compound converted to the oxide by firing, and (8) a seventh sub-component comprising at least one compound selected from CaZrO₃, a mixture of CaO and ZrO₂, a compound converted to CaZrO₃ by firing, and a mixture of compounds converted to CaO and ZrO₂, respectively, by firing, the numbers of moles of the first, second, third, fourth, fifth, sixth, and seventh sub-components relative to 100 moles of the barium titanate being 0 to 7, 0.5 to 12, 0.01 to 0.5, 0 to 7, 0.5 to 9, 0 to 0.5, and 0 to 5, respectively, in terms of the respective oxides, and the ratio (A/B) of the number of moles A of the second sub-component to the total number of moles B of the fourth and fifth sub-components being 0.7 or more.

In order to achieve the fourth object, a dielectric ceramic composition raw material II comprises the same basic components as those of the dielectric ceramic composition raw material I, wherein the ratio (C/D) of the number of moles C of Si atoms in the second sub-component to the total number of moles of the atoms in the first to seventh sub-components excluding the Si atoms and oxygen atoms is 0.2 or more, and the total number of moles of the fourth and fifth sub-components is 3 moles or more.

As described above, in the dielectric ceramic composition I and the multilayer ceramic capacitor I of the present invention, the amounts of the sintering aid for preventing half-baking and the rare earth elements functioning as donors are controlled as described above. Therefore, the dielectric ceramic composition I and the multilayer ceramic capacitor I have a long mean time to failure and capacitance-temperature characteristics satisfying the X8R characteristic (ΔC/C = ±15% at -55°C to 150°C) stipulated in the EIA standard. Therefore, when a dielectric layer is further thinned for decreasing size and increasing capacitance, availability becomes significant, and particularly the dielectric ceramic composition I and the multilayer ceramic capacitor I are effective in application to automobiles used in severe environments.

Also, in the dielectric ceramic composition II and the multilayer ceramic capacitor II of the present invention, the ratio of the second sub-component functioning as the sintering aid to the other sub-components is controlled as described above, and the total amount of the rare earth components is controlled in the above-described range. Therefore, the dielectric ceramic composition II and the multilayer ceramic capacitor II have a long mean time to failure, a small variation in lifetime, and capacitance-temperature characteristics satisfying the X8R characteristic (ΔC/C = ±15% at -55°C to 150°C) stipulated in the EIA standard. Therefore, when a dielectric layer is further thinned for decreasing size and increasing capacitance, the availability becomes significant, and particularly the dielectric ceramic composition II and the multilayer ceramic capacitor II with high reliability can be applied to automobiles used in severe environments.

The dielectric ceramic composition raw materials (I and II) and the dielectric ceramic compositions (I and II) of the present invention do not contain Pb, Bi, Zn, and the like, and can thus be fired in a reducing atmosphere. There is also the effect that the capacitance less changes with time under a DC electric field.

The method for manufacturing the multilayer ceramic capacitor I is capable of manufacturing a multilayer ceramic capacitor I having a long mean time to failure and satisfying the X8R characteristic. Also, the method for manufacturing the multilayer ceramic capacitor II is capable of manufacturing a multilayer ceramic capacitor II satisfying the X8R characteristic and having a long mean time to failure and a small variation in lifetime.

### BRIEF DESCRIPTION OF THE DRAWINGS

Fig. 1 is a partially cut-way perspective view schematically showing an example of a multilayer ceramic capacitor of the present invention; and
Fig. 2 is a sectional view schematically showing the basic structure of a multilayer ceramic capacitor of the present invention.

### DESCRIPTION OF THE PREFERRED EMBODIMENTS

A dielectric ceramic composition, a method for producing the dielectric ceramic composition, a multilayer ceramic capacitor, and a raw material for the dielectric ceramic composition according to the present invention will be described below. The scope of the present invention is not limited by the embodiments described below.

### (Multilayer ceramic capacitor and dielectric ceramic composition)

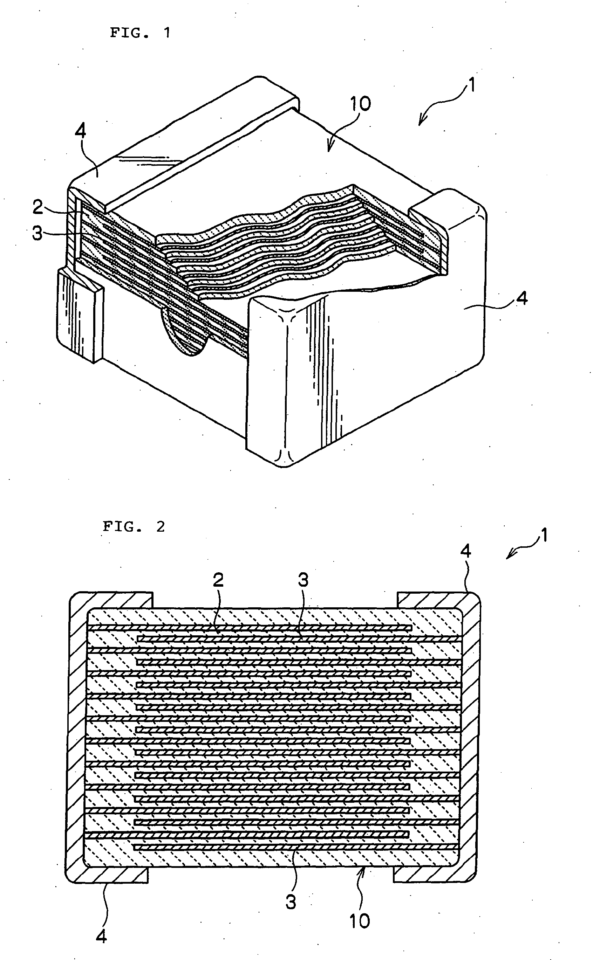

Fig. 1 is a partially cut-away perspective view schematically showing an example of a multilayer ceramic capacitor of the present invention. Fig. 2 is a sectional view schematically showing the basic structure of a multilayer ceramic capacitor of the present invention.

As shown in Figs. 1 and 2, a multilayer ceramic capacitor of the present invention comprises a laminate (referred to as a "multilayer dielectric device body 10" or a "device body 10" hereinafter) produced by alternately stacking dielectric layers 2 and internal electrode layers 3. Also, a pair of external electrodes 4 is formed on both ends of the multilayer dielectric device body 10 so that the external electrodes 4 are electrically connected to the respective internal electrode layers 3 alternately disposed in the device body 10. The shape of the multilayer dielectric device body 10 is generally a rectangular prism, but it is not particularly limited. The dimensions are also not particularly limited, but the dimensions generally include a long side of about 0.6 to 5.6 mm, a short side of 0.3 to 5.0 mm, and a height of 0.3 to 1.9 mm.

The dielectric layers 2 are made of a dielectric ceramic composition comprising the basic components below. The dielectric ceramic composition comprises the basic components including (a) barium titanate, (b) a first sub-component comprising at least one oxide selected from a Mg oxide, a Ca oxide, a Ba oxide, and Sr oxide, (c) a second sub-component comprising an oxide containing 1 mol of Si atoms per mol, (d) a third sub-component comprising at least one selected from a V oxide, a Mo oxide, and a W oxide, (e) a fourth sub-component comprising at least one R¹ oxide (wherein R¹ is at least one selected from Sc, Er, Tm, Yb, and Lu), (f) a fifth sub-component comprising at least one R² oxide (wherein R² is at least one selected from Y, Dy, Ho, Tb, Gd, and Eu), (g) a sixth sub-component comprising at least one selected from a Mn oxide and a Cr oxide, and (h) a seventh sub-component comprising at least one selected from calcium zirconate, and a mixture of a Ca oxide and Zr oxide.

The ratio of each component of the dielectric ceramic composition can be expressed by a number of moles relative to 100 moles of barium titanate.

For example, the dielectric ceramic composition contains the components in respective number of moles relative to 100 moles of barium titanate, the components including the first sub-component comprising a Mg oxide, a Ca oxide, a Ba oxide, or Sr oxide with a number of moles of 0 to 7 in terms of MgO, CaO, BaO, or SrO, the second sub-component with a number of moles of 0.5 to 12 in terms of the oxide containing 1 mol of Si atoms per mol, the third sub-component comprising a V oxide, a Mo oxide, or a W oxide with a number of moles of 0.01 to 0.5 in terms of V₂O₅, MoO₃, or WO₃, the fourth sub-component comprising a R¹ oxide (wherein R¹ is at least one selected from Sc, Er, Tm, Yb, and Lu) with a number of moles of 0 to 7 in terms of R¹₂O₃, the fifth sub-component comprising a R² oxide (wherein R² is at least one selected from Y, Dy, Ho, Tb, Gd, and Eu) with a number of moles of 0.5 to 9 in terms of R²₂O₃, the sixth sub-component comprising a Mn oxide or a Cr oxide with a number of moles of 0 to 0.5 in terms of MnO or Cr₂O₃, and the seventh sub-component comprising calcium zirconate or a mixture of a Ca oxide and Zr oxide with a number of moles of 0 to 5 in terms of CaZrO₂ or CaO+ZrO₃.

In the present invention, barium titanate may deviate from the stoichiometric composition. In this case, the number of moles of each component is expressed relative to 100 moles of barium titanate deviating from the stoichiometric composition. Also, the oxide as each of the sub-components in the dielectric ceramic composition may deviate the stoichiometric composition. In this case, the number of moles of each oxide deviating from the stoichiometric composition is a number of moles in terms of the stoichiometric composition relative to 100 moles of barium titanate. The number of moles of each component is determined based on quantitative data of atoms of each component. The quantitative data can be obtained by various conventional known methods. For example, the quantitative data can relatively easily be obtained by analysis such as fluorescent X-ray analysis, ICP (radio-frequency inductively coupled plasma spectroscopy), or the like.

The reason for limiting the content of each of the sub-components is as follows:

When the content of the first sub-component is 0 mole (not contained), a rate of change in capacitance with temperature is increased. On the other hand, when the content of the first sub-component exceeds 7 moles, sinterability degrades. The ratio of oxides in the first sub-component is any desired value, and the lower limit of the content of the first sub-component is, for example, 0.01 mole.

The second sub-component functions as a sintering aid for preventing half-baking and, for example, contains silicon oxide as a main component. When the content of the second sub-component is less than 0.5 mole, the capacitance-temperature characteristics degrade, and insulation resistance (IR) decreases. On the other hand, the content of the second sub-component exceeds 12 moles, the IR lifetime is insufficient, and the dielectric constant rapidly decreases. The second sub-component preferably comprises a compound oxide containing at least one selected from SiO₂, MO (wherein M is at least one element selected from Ba, Ca, Sr, and Mg) , LiO₂, and B₂O₃. The second sub-component mainly functions as the sintering aid, but has the effect of improving the defective ratio of the initial insulation resistance in the form of a thin layer.

The compound oxide as the second sub-component is more preferably represented by (Ba, Ca)ₓSiO₂₊ₓ (x = 0.7 to 1.2). Although Ba and Ca atoms in (Ba, Ca)ₓSiO₂₊ₓ are contained in the first sub-component, the compound oxide (Ba, Ca)ₓSiO₂₊ₓ desirably functions as the sintering aid having high reactivity to the main component because of its low melting point. In (Ba, Ca)ₓSiO₂₊ₓ, x is in a range of 0.7 to 1.2, and preferably 0.8 to 1.1. When x is less than 0.7, i.e., when the content of the Si component is excessively high relative to the (Ba, Ca) component, the second sub-component reacts with BaTiO₃ as the main component to worsen the dielectric characteristics. When x exceeds 1.2, the melting point increases to undesirably worsen the sinterability. The Ba-Ca ratio may be any value, and either of Ba and Ca may be contained. In the invention, the term "IR lifetime" means the time to a decrease in the insulation resistance of the capacitor to 1/10 of the value at the start of measurement.

The third sub-component has the effect of flattening the capacitance-temperature characteristics at temperatures higher than the Curie temperature of the resultant dielectric ceramic composition, and the effect of improving the IR lifetime. When the content of the third sub-component is less than 0.01 mole, these effects are insufficient. On the other hand, when the content of the third sub-component exceeds 0.5 mole, IR significantly decreases. The ratio of oxides in the third sub-component is any desired value.

The fourth sub-component functions as a donor (donor for preventing movement of oxygen defects) for preventing insulation breakdown of a dielectric material due to movement of oxygen defects with the electric field applied. The fourth sub-component need not be necessarily added, and the amount of the fourth sub-component added may be 0 mole. However, the time to insulation breakdown can be increased by adding the fourth sub-component and increasing the adding amount thereof. The fourth sub-component also has the effect of shifting the Curie temperature of the resulting dielectric ceramic composition to the higher temperature side, and the effect of flattening the capacitance-temperature characteristics. When the content of the fourth sub-component exceeds 7 moles, half-baking may occur to in turn decrease the lifetime. As the fourth sub-component, an Yb oxide is preferred because of its high effect of improving characteristics and low cost.

Like the fourth sub-component, the fifth sub-component functions as a donor (donor for preventing movement of oxygen defects) for preventing insulation breakdown of a dielectric material due to movement of oxygen defects with the electric field applied. The fifth sub-component need not be necessarily added, and the amount of the fourth sub-component added may be 0 mole. However, the time to insulation breakdown can be increased by adding the fifth sub-component. The fourth sub-component also has the effect of improving IR and IR lifetime, and has a small adverse effect on the capacitance-temperature characteristics. When the content of the fifth sub-component is less than 0.5 mole, the time to insulation breakdown cannot be increased. On the other hand, when the content of the fifth sub-component exceeds 9 moles, half-baking may occur to in turn decrease the lifetime. As the fifth sub-component, a Y oxide is preferred because of low cost and its large effect of improving characteristics.

The sixth sub-component has the effect of promoting sintering, the effect of increasing IR, and the effect of improving IR lifetime. In order to sufficiently obtain these effects, the ratio of the sixth sub-component relative to 100 moles of BaTiO₃ is preferably 0 (preferable lower limit 0.01 mole) to 0.5 mole. When the content of the sixth sub-component exceeds 0.5 mole, the capacitance-temperature characteristics may be adversely affected.

The seventh sub-component has the effect of shifting the Curie temperature of the resulting dielectric ceramic composition to the higher temperature side, and the effect of flattening the capacitance-temperature characteristics. When the content of the seventh sub-component exceeds 5 moles, the IR accelerated lifetime significantly decreases, and the capacitance-temperature characteristics (X8R characteristic) worsen. Although the form of calcium zirconate (for example, represented by CaZrO₃ contained as the seventh sub-component is not particularly limited, for example, it is contained as a compound oxide such s CaZrO₃ or the like. The seventh sub-component is contained using a Ca oxide such as CaO, a carbonate such as CaCO₃, an organic compound, CaZrO₃, or the like as a raw material. The Ca-Zr ratio in terms of CaZrO₃ or CaO+ZrO₂ is not particularly limited, and may be determined so that the seventh component is not dissolved in BaTiO₃ as the main component. The molar ratio (Ca/Zr) of Ca to Zr is preferably 0.5 to 1.5, more preferably 0.8 to 1.5, and most preferably 0.9 to 1.1. The term "IR accelerated lifetime" means the time to a decrease in insulation resistance of the capacitor to 1/10 of the value at the start of measurement in an acceleration test at 200°C in an electric field of 15 V/µm.

In the dielectric ceramic composition, the contents of the fourth sub-component (R¹ oxide, i.e., rare earth element oxide) and the seventh sub-component (CaZrO₃ or CaO+ZrO₂) are controlled to flatten the capacitance-temperature characteristics (X8R characteristic) and improve the high-temperature accelerated lifetime. In particular, within the above-described numerical ranges, precipitation of a heterogenous phase is suppressed, thereby homogenizing the texture.

The dielectric ceramic composition may further contain an Al oxide (for example, Al₂O₃) besides the above-described oxides. An Al oxide exhibits the effect of improving sinterability and the IR and IR lifetime with little influence on the capacitance-temperature characteristics.

The dielectric ceramic composition containing the basic components at the above-described component ratios according to the present invention is characterized in that the ratio (A/B) of the number of moles A of the second sub-component to the total number of moles B of the fourth and fifth sub-components is 0.7 or more (referred to as "dielectric ceramic composition I" in the invention). The dielectric ceramic composition I having an A/B ratio of 0.7 or more satisfies the X8R characteristic and has a long mean time to failure. When the A/B ratio is less than 0.7, a dielectric ceramic composition having a long mean time to failure cannot be obtained.

In a conventional barium titanate-based dielectric ceramic composition, when an electric field is applied, oxygen defects present in a dielectric material move to break down the insulation of the dielectric material. Therefore, rare earth elements (R¹ atoms and R² atoms) functioning as a donor are added for preventing the movement of the oxygen defects. Although the addition of the rare earth element increases the time to breakdown of insulation, the addition of a large amount of rare earth elements may cause half-baking and may in turn decrease the lifetime. In the present invention, in order to prevent this problem, the ratio of the second sub-component functioning as a sintering aid for preventing half-baking to the total of the fourth and fifth sub-components comprising rare earth elements functioning as a donor is controlled in the above-described range, thereby producing the dielectric ceramic composition 1 having a long mean time to failure.

As described above, the number of moles A of the second sub-component is converted into the number of moles of the oxide containing 1 mole of Si atoms per mole. For example, when the second sub-component is a compound oxide represented by (Ba, Ca)ₓSiO₂₊ₓ (x = 0.7 to 1.2), the number of moles A is the number of moles of the Si atoms in the compound oxide.

The total number of moles B of the fourth sub-component (rare earth oxide: R¹ oxide) and the fifth sub-component (rare earth oxide: R² oxide) is preferably 8 moles or less, and more preferably 6.5 moles or less, relative to 100 moles of BaTiO₃. When the total number of moles B is 5 or less, the sinterability can be kept higher.

The dielectric ceramic composition having the basic components at the above-described component ratios according to the present invention is also characterized in that the ratio (C/D) of the number of moles C of Si atoms in the second sub-component to the total number of moles D of the atoms in the first to seventh sub-components excluding Si atoms and oxygen atoms is 0.2 or more, and the total number of moles of the fourth and fifth sub-component is 3 or more (referred to as "dielectric ceramic composition II" in the invention).

The dielectric ceramic composition II having a C/D ratio of 0.2 or more and a total number of moles of the fourth and fifth sub-components of 3 or more has a long mean time to failure (MTTF) and excellent reliability. This is possibly because the fourth and fifth sub-components function as donor components for preventing the movement of oxygen defects, and the amount of Si functioning as a grain boundary component is increased by setting the C/D ratio to 0.2 or more, thereby increasing the electric field applied to the grain boundaries and eliminating the electric field applied to the insides of grains. When the C/D ratio is less than 0.2 or the total number of moles of the fourth and fifth sub-components is less than 3, the resulting dielectric ceramic composition cannot satisfy the desired mean time to failure.

Since the second sub-component comprises an oxide containing 1 mole of Si atoms per mole, the number of moles C of Si atoms in the second sub-component is the same as that of the oxide added as the second sub-component. On the other hand, "oxygen atoms" means the oxygen constituting the dielectric ceramic composition. Therefore, the total number of moles D of the atoms in the first to seventh sub-component excluding the Si atoms and oxygen atoms contained in the dielectric ceramic composition is the total number of moles of the atoms excluding Ba atoms and Ti atoms in BaTiO₃ as the main component, Si atoms in the second sub-component, and all oxygen atoms in the dielectric ceramic composition. The total number of moles D can be determined by quantitative analysis of the elements contained in the dielectric ceramic composition using measurement means such as fluorescent X-ray analysis, ICP (radio-frequency inductively coupled plasma spectroscopy), or the like. For example, the components (Ba, Ti, Mg, Ca, Sr, Si, V, Mo, W, Sc, Er, Tm, Yb, Lu, Y, Dy, Ho, Tb, Gd, Eu, Mn, Cr, Zr, and the like) other than oxygen atoms in the dielectric ceramic composition are quantitatively analyzed to calculate the number of moles of each element. The number of moles of Ba atoms added as a sub-component is calculated by subtracting a number of moles of Ba in terms of the stoichiometric composition of BaTiO₃ from a number of moles of Ba calculated based on the number of moles of Ti atoms. With respect to the other components, the number of moles of each element is calculated as a number of moles of atoms in each sub-component. The C/D ratio can be calculated from the calculated number of moles of each of the components. The number of moles of the fourth and fifth sub-components are calculated based on the result of quantitative analysis of the rare earth elements including Sc, Er, Tm, Yb, Lu, Y, Dy, Ho, Tb, Gd, and Eu.

When the dielectric ceramic composition has a C/D ratio of 0.2 or more and less than 0.24, there is the effect of decreasing a variation in the mean time to failure in addition to the effect of improving the mean time to failure (MTTF). Although the reason for this is not known, a conceivable reason is that the amount of Si functioning as the grain boundary component is optimized. The variation in lifetime is shown by an m value which indicates the inclination of a regression line in a Weibull distribution. As the m value increases, the variation in the mean time to failure (MTTF) decreases, and reliability becomes excellent. When the C/D ratio is less than 0.20 and 0.24 or more, the variation in the mean time to failure tends to increase (the m value tends to decrease), and satisfactory reliability cannot be obtained.

The Curie temperature (temperature of phase transition from ferroelectric to dielectric) of the dielectric ceramic composition (including both the dielectric ceramic compositions I and II hereinafter) can be changed by changing the composition of the dielectric ceramic composition. However, in order to satisfy the X8R characteristic, the Curie temperature is preferably 120°C or more, and more preferably 123°C or more. The Curie temperature can be measured by DSC (differential scanning calorimetry) or the like. When Ba or Ti of the main component having a perovskite structure is substituted by at least one of Sr, Zr, and Sn, the Curie temperature is shifted to the lower temperature side, thereby deteriorating the capacitance-temperature characteristics. Therefore, it is preferable that BaTiO₃ [for example, (Ba, Sr)TiO₃] containing such elements is not used as the main component. However, there is no problem as long as the content of at least one of Sr, Zr, and Sn is an impurity level (for example, about 0.1 mol% or less of the whole of the dielectric ceramic composition).

The dielectric particles constitute a dielectric layer formed by firing the dielectric ceramic composition. However, in the present invention, the average particle diameter of the dielectric particles is not particularly limited, and may be appropriately determined in a range of, for example, 0.1 to 3 µm, according to the thickness of the dielectric layer, and the like. More specifically, when the average particle diameter is 0.1 to 0.5 µm, the IR lifetime is effectively increased, and changes in capacitance with time under a DC electric field can be decreased. In the present invention, the average particle diameter of the dielectric particles is determined by a code method.

The sentence "the capacitance-temperature characteristics satisfy the X8R characteristic stipulated in the EIA standard" means that the produced multilayer ceramic capacitor can be preferably used as an electronic part for an apparatus used in an environment of 80°C or more, particularly 125°C to 150°C. In this temperature range, the capacitance-temperature characteristics satisfy the R characteristic stipulated in the EIA standard and further satisfy the X8R characteristic (ΔC/C = ±15% at -55°C to 150°C) stipulated in the EIA standard. Also, the temperature characteristics can simultaneously satisfy the B characteristic [rate of change in capacitance is +15% (reference temperature 20°C) at -25°C to 85°C] stipulated in the EIA standard and the X7R characteristic (ΔC = ±15% at - 55°C to 125°C) stipulated in the EIA standard. The phrase "excellent change in capacitance with time" means that a rate of change in capacitance is less than 10% 1000 hours after when a DC voltage of, for example, 7 V/µm is applied to the produced multilayer ceramic capacitor at a temperature of, for example, 85°C.

Although the number and the thickness of the dielectric layers 2 stacked may be appropriately determined according to purposes and applications, the thickness of the dielectric layers 2 is generally 30 µm or less. From the viewpoint of decreasing the size and increasing the capacitance, the thickness of the dielectric layers 2 is preferably 10 µm or less. The multilayer ceramic capacitor comprising such thin dielectric layers permits the realization of a smaller size and higher capacitance, and the average particle diameter of the dielectric particles constituting the dielectric layers is specified to effectively improve the capacitance-temperature characteristics. The lower limit of the thickness of the dielectric layers is not particularly limited. However, if an example is to be quoted, the lower limit is about 0.5 µm. The number of the dielectric layers stacked is generally about 2 to 1000.

The dielectric layers 2 and internal electrode layers 3 are alternately provided, and the ends of these layers 2 and 3 are alternately exposed from the two opposite end surfaces of the multilayer dielectric device body 10. Also, a pair of external electrodes 4 is formed on both ends of the multilayer dielectric device body 10 and connected to the exposed ends of the nickel internal electrode layers 3 disposed alternately to form the multilayer ceramic capacitor.

The internal electrode layers 3 comprise a non-metallic conductive material substantially functioning as electrodes. Specifically, Ni or a Ni alloy is preferred. As the Ni alloy, a Ni alloy with at least one of Mn, Cr, Co, Al, W, and the like is preferred, and the Ni content of the alloy is preferably 95% by weight or more. Ni or the Ni alloy may contain 0.1% by weight or less of trace components such as P, C, Nb, Fe, Cl, B, Li, Na, K, F, S, and the like. The number and thickness of the internal electrode layers 3 stacked may be appropriately determined according to purposes and application. With the dielectric ceramic composition I, the thickness of the internal electrode layers 3 is preferably about 0.1 µ to 5 µm, and more preferably 0.5 µm to 2.5 µm. With the dielectric ceramic composition II, the thickness of the internal electrode layers 3 is preferably about 0.5 µ to 10 µm, and more preferably 1 µm to 2.5 µm.

The external electrodes 4 are electrically connected to the internal electrode layers 3 alternately disposed in the multilayer ceramic device body 10, and formed at both ends of the multilayer ceramic device body 10. In general, at least one of Ni, Pd, Ag, Au, Cu, Pt, Rh, Ru, Ir, and the like or an alloy thereof can be used for the external electrodes 4. Specifically, Cu, a Cu alloy, Ni, a Ni alloy, Ag, an Ag-Pd alloy, an In-Ga alloy, or the like can be used. Although the thickness of the external electrodes 4 may be appropriately determined according to applications, the thickness is preferably about 10 µm to 200 µm.

### (Method for manufacturing multilayer ceramic capacitor)

Like a conventional multilayer ceramic capacitor, the multilayer ceramic capacitor of the present invention is manufactured by forming a green chip by a usual printing method or sheet method using a paste, firing the green chip, forming external electrodes by printing or transfer, and then firing the external electrodes.

More specifically, the multilayer ceramic capacitor is manufactured by a method comprising a step of preparing the above-described dielectric ceramic composition raw material; a step of alternately stacking green sheets for forming the dielectric layers and paste layers for forming the internal electrode layers to form a laminate, the green sheets being formed using a paste for the dielectric layers containing the dielectric ceramic composition raw material, and the base layers being formed using a paste for the internal electrodes; and a step of firing the laminate to form a ceramic chip in which the green sheets become the dielectric layers and the base layers become the internal electrode layers; and a step of reoxidizing the dielectric layers in the ceramic chip. The manufacturing method will be described in detail below.

The paste for the dielectric layers comprises a coating material produced by kneading the dielectric ceramic composition raw material and an organic vehicle, and the coating material may be either an organic or aqueous coating material.

As the dielectric ceramic composition raw material, the above oxides, a mixture thereof, or a compound oxide can be used. However, compounds can be appropriately selected from various compounds which converted to the oxides or the compound oxide by firing, for example, carbonates, oxalates, nitrates, hydroxides, and organic metal compounds, and mixed. In the dielectric ceramic composition raw material, the content of each of the oxides and/or a compound converted to each oxide by firing may be determined so that the above-described dielectric ceramic composition can be obtained after firing. The dielectric ceramic composition raw material generally comprises a powder having an average particle diameter of about 0.1 µm to 3 µm.

In more detail, the dielectric ceramic composition raw material comprises basic components including (1) barium titanate and/or a compound or a mixture converted to barium titanate by firing, (2) a first sub-component comprising at least one oxide selected from MgO, CaO, BaO, and SrO and/or a compound converted to the oxide by firing, (3) a second sub-component comprising an oxide containing 1 mol of Si atoms per mol, (4) a third sub-component comprising at least one oxide selected from V₂O₅, MoO₃, WO₃ and/or a compound converted to the oxide by firing, (5) a fourth sub-component comprising at least one oxide represented by R¹₂O₃ (wherein R¹ is an element selected from Sc, Er, Tm, Yb, and Lu) and/or a compound converted to the oxide by firing, (6) a fifth sub-component comprising at least one oxide represented by R²₂O₃ (wherein R² is at least one selected from Y, Dy, Ho, Tb, Gd, and Eu) and/or a compound converted to the oxide by firing, (7) a sixth sub-component comprising at least one oxide selected from MnO and Cr₂O₃ and/or a compound converted to the oxide by firing, and (8) a seventh sub-component comprising at least one compound selected from CaZrO₃, a mixture of CaO and ZrO₂, a compound converted to CazrO₃ by firing, and a mixture of compounds converted to CaO and ZrO₂, respectively, by firing, the numbers of moles of the first, second, third, fourth, fifth, sixth, and seventh sub-components relative to 100 moles of the barium titanate being 0 to 7, 0.5 to 12, 0.01 to 0.5, 0 to 7, 0.5 to 9, 0 to 0.5, and 0 to 5, respectively, in terms of the respective oxides.

As the dielectric ceramic composition raw material comprising the above basic components, a dielectric ceramic composition raw material I in which the ratio (A/B) of the number of moles A of the second sub-component to the total number of moles B of the fourth and fifth sub-components is 0.7 or more is used for the dielectric ceramic composition I.

On the other hand, as the dielectric ceramic composition raw material comprising the above basic components, a dielectric ceramic composition raw material II in which the ratio (C/D) of the number of moles A of Si atoms in the second sub-component to the total number of moles D of atoms in the first to seventh sub-components excluding Si atoms and oxygen atoms in the dielectric ceramic composition is 0.2 or more, and the total number of moles of the fourth and fifth sub-components 3 moles or more is used for the dielectric ceramic composition II.

The organic vehicle is produced by dissolving a binder in an organic solvent. The binder used for the organic vehicle is not particularly limited, and the binder may be appropriately selected from usual binders such as ethyl cellulose, and polyvinyl butyral. The organic solvent used is not particularly limited, and the solvent may be appropriately selected from various organic solvents such as terpineol, butyl carbitol, acetone, and toluene according to the method used, such as the printing method or the sheet method.

When the paste for the dielectric layers comprises an aqueous coating material, an aqueous vehicle containing a water-soluble binder and a dispersant which are dissolved in water and the dielectric ceramic composition raw material may be kneaded. The water-soluble binder used in the aqueous vehicle is not particularly limited, and for example, polyvinyl alcohol, cellulose, water-soluble acrylic resin, or the like may be used.

The paste for the internal electrode layers is prepared by kneading a conductive material comprising the above-described dielectric metal or alloy or an oxide converted to the conductive material after firing, an organic metal compound, resinate, and the organic vehicle. The paste for the external electrodes may be prepared by the same method as that for the paste for the internal electrode layers.

The content of the organic vehicle in each paste is not particularly limited, and the vehicle generally contains about 1 to 5% by weight of the binder and 10 to 50% by weight of the solvent. Each paste may further contain additives selected from various dispersants, plasticizers, dielectrics, insulators, and the like. The total content of the additives is preferably 10% by weight or less.

In use of the printing method, the paste for the dielectric layers and the paste for the internal electrode layers are alternately stacked on a PET substrate or the like to form a laminate, and the laminate is then cut into a predetermined shape and then separated from the substrate to form a green chip. In use of the sheet method, a green sheet is formed using the paste for the dielectric layers, and the paste for the internal electrode layers is printed on the green sheet, and then a plurality of green sheets is stacked to form a green chip.

The green chip is subjected to removal of the binder before firing. The removal of the binder may be performed under usual conditions. However, when a base metal such as Ni or an Ni alloy is used as the conductive material of the internal electrode layers, the heating rate in an air atmosphere is preferably 5 to 300 °C/hr and more preferably 10 to 100 °C/hr, the retention temperature is preferably 180°C to 400°C, and more preferably 200°C to 300°C, and the temperature retention time is preferably 0.5 to 24 hours and more preferably 5 to 20 hours.

The atmosphere for firing the green chip may be appropriately determined according to the type of the conductive material in the paste for the internal electrode layers. However, when a base metal such as Ni or a Ni alloy is used as the conductive material, the oxygen partial pressure in the firing atmosphere is preferably 10⁻⁸ atm to 10⁻¹² atm. When the oxygen partial pressure is less than this range, the conductive material of the internal electrode layers is abnormally sintered to cause discontinuity. If the oxygen partial pressure exceeds the above range, the internal electrode layers tend to be oxidized.

During firing, the retention temperature is preferably 1100°C to 1400°C, more preferably 1200°C to 1360°C, and most preferably 1200°C to 1320°C. When the retention temperature is less than the range, densification becomes insufficient, while when the retention temperature exceeds the range, discontinuity of the electrodes occurs due to abnormal sintering of the internal electrode layers, the capacitance-temperature characteristics deteriorate due to diffusion of the internal electrode component materials, and the dielectric ceramic composition is easily reduced.

As the other firing conditions, the heating rate is preferably 50 to 500 °C/hr, and more preferably 200 to 300 °C/hr, the temperature retention time is preferably 0.5 to 8 hours and more preferably 1 to 3 hours, and the cooling rate is preferably 50 to 500 °C/hr and more preferably 200 to 300 °C/hr. The firing atmosphere is preferably a reducing atmosphere, and, for example, a mixed gas of N₂ and H₂ is preferably humidified and used as the atmospheric gas.

When firing is performed in the reducing atmosphere, the multilayer dielectric device body is preferably annealed. Annealing is performed for re-oxidizing the dielectric layers, thereby increasing the IR lifetime and improving reliability.

The oxygen partial pressure in the annealing atmosphere is 10⁻⁶ atm or more, particularly 10⁻⁵ to 10⁻⁴ atm. When the oxygen partial pressure is less than the above range, re-oxidation of the dielectric layers becomes difficult. When the oxygen partial pressure exceeds the above range, the internal electrode layers tend to be oxidized.

During annealing, the retention temperature is preferably 1100°C or less, particularly 500°C to 1100°C. When the retention temperature is less than the above range, oxidation of the dielectric layers becomes insufficient. Therefore, the IR tends to decrease, and the IR lifetime tends to decrease. On the other hand, when the retention temperature exceeds the above range, the internal electrode layers are oxidized to decrease the capacitance, and the internal electrode layers react with the dielectric base material to easily degrade the capacitance-temperature characteristics and decrease the IR and the IR lifetime. The annealing may comprise only a heating step and a cooling step. Namely, the temperature retention time may be zero. In this case, the retention temperature corresponds to the highest temperature.

As other annealing conditions, the temperature retention time is preferably 0 to 20 hours and more preferably 6 to 10 hours, and the cooling rate is preferably 50 to 500 °C/hr and more preferably 100 to 300 °C/hr. As the annealing atmospheric gas, for example, wet N₂ gas is preferably used.

In the removal of the binder, firing, and annealing, the N₂ gas and the mixed gas are humidified by, for example, a wetter or the like. In this case, the water temperature is preferably about 5°C to 75°C.

The removal of the binder, firing, and annealing may be performed continuously or independently. When these treatments are continuously performed, preferably, the atmosphere is changed without cooling after the removal of the binder, and then the temperature is increased to the retention temperature for firing. Then, the temperature is decreased by cooling to the retention temperature for annealing, and the atmosphere is changed to perform annealing. On the other hand, the treatments are independently performed, preferably, the temperature is increased to the retention temperature for the removal of the binder in a N₂ gas or wet N₂ gas atmosphere, and then the atmosphere is changed. Then, the temperature is further increased for firing. For annealing, the temperature is decreased by cooling to the retention temperature for annealing, and then the atmosphere is changed to the N2 gas or wet N2 gas atmosphere. Then, cooling is further continued for annealing. For annealing, the atmosphere may be changed after the temperature is increased to the retention temperature in the N₂ gas atmosphere, and the whole step may be performed in the wet N₂ gas atmosphere.

The ends of the multilayer dielectric device body obtained as described above are polished by, for example, barrel polishing, sand blasting, or the like, and the paste for the external electrodes is printed or transferred and then fired to form the external electrodes 4. For example, the paste for the external electrodes is preferably fired in a wet mixed gas of N₂ and H₂ at 600°C to 800°C for about 10 minutes to 1 hour. If required, coating layers are formed on the surfaces of the external electrodes 4 by plating or the like. The multilayer ceramic capacitor of the present invention is mounted on a printed circuit board by soldering or the like and used for various electronic apparatuses.

The multilayer ceramic capacitor of the present invention and the manufacturing method therefore are described above. However, the present invention is not limited to this, and of course, the present invention can be carried out in various modes within the scope of the gist.

### Examples

The present invention will be described in detail below with reference to examples and comparative examples. However, the present invention is not limited to the description below.

### (Preparation of Sample 1)

First, a main component raw material (BaTiO₃) and first to seventh sub-component raw materials having an average particle diameter of 0.1 to 1 µm were prepared as starting materials for producing a dielectric material. With respect to BaTiO₃ as the main component, BaCO₃ and TiO₂ were weighed and wet-mixed with a ball mill for about 16 hours. Then, the resultant mixture was dried, fired in air at a temperature of about 1100°C, and then further wet-ground with a ball mill for about 16 hours to produce BaTiO₃ similar to the prepared raw material BaTiO₃. Also, similar BaTiO₃ used as the main component could be produced by hydrothermal synthesis, oxalate method, or the like.

Carbonates (first sub-component: MgCO₃ sixth sub-component: MnCO₃) were used as raw materials for MgO and MnO, respectively, and oxides (second sub-component: (Ba_{0.6}Ca_{0.4})SiO₃, third sub-component: V₂O₅, fourth sub-component: Yb₂O₃, fifth sub-component: Y₂O₃, seventh sub-component: CaZrO₃) were used as the other raw materials. These sub-components were prepared so that the number of moles of each sub-component in terms of the oxide relative to 100 moles of BaTiO₃ was as shown in Table 1. The sub-components were wet-mixed by a ball mill for 16 hours and then dried to prepare a dielectric ceramic composition raw material 1. In order to produce the second sub-component (Ba_{0.6}Ca_{0.4})SiO₃, BaCO₃, CaCO₃, and SiO₂ were wet-mixed by a ball mill for 16 hours, dried, fired in air at 1150°C, and then further wet-ground by a ball mill for 100 hours. The seventh sub-component CaZrO₃ was produced by wet-mixing CaCO₃ and ZrO₂ by a ball mill for 16 hours, drying and then firing the resulting mixture in air at 1150°C, and then wet-grinding the mixture by a ball mill for 24 hours.

Then, 100 parts by weight of the dry dielectric ceramic composition raw material prepared as described above, 4.8 parts by weight of an acrylic resin, 40 parts by weight of methylene chloride, 20 parts by weight of ethyl acetate, 6 parts by weight of mineral spirit, and 4 parts by weight of acetone were mixed by a ball mill to form a paste for dielectric layers.

Then, 100 parts by weight of Ni particles having an average particle diameter of 0.4 µm, 40 parts by weight of an organic vehicle (prepared by dissolving 8 parts by weight of ethyl cellulose in 92 parts by weight of butyl carbitol), and 10 parts by weight of butyl carbitol were kneaded by three rolls to form a paste for internal electrode layers. For external electrodes, a paste-like In-Ga alloy was prepared.

Next, a green sheet of 4.5 µm in thickness was formed on a PET film using the paste for dielectric layers, and the paste for internal electrode layers was printed on the green sheet. Then, the green sheet was separated from the PET film, and the green sheet and a protective green sheet (without the paste for internal electrode layers printed thereon) were stacked and compressed to form a green chip. The number of the sheets having the internal electrodes stacked was 5.

Next, the green chip was cut into a predetermined size, subjected to removal of the binder, fired and then annealed to produce a sintered compact used as a multilayer ceramic chip. The removal of the binder was performed in an air atmosphere under the conditions including a heating rate of 32.5 °C/hr, a retention temperature of 260°C, and a retention time of 8 hours. Firing was performed in an atmosphere of a wet N₂+H₂ gas mixture (oxygen partial pressure: 10⁻¹² atm) under the conditions including a heating rate of 200 °C/hr, a retention temperature of 1320°C, a retention time of 2 hours, and a cooling rate of 200 °C/hr. Annealing was performed in an atmosphere of a wet N₂ gas (oxygen partial pressure: 10⁻⁵ atm) under the conditions including a retention temperature of 1050°C, a temperature retention time of 2 hours, and a cooling rate of 200 °C/hr. The atmospheric gases used for firing and annealing were humidified by a wetter at a water temperature of 20°C.

Next, the end surfaces of the multilayer ceramic chip were polished by sand blasting, and the external electrodes were formed by coating the paste-like In-Ga alloy on the end surfaces to prepare Sample 1 of the multilayer ceramic capacitor I. The sample was of a size of 3.2 mm x 1.6 mm x 0.6 mm, the number of the dielectric layers held between the respective internal electrode layers was 5, the thickness of each dielectric layer was 3.5 µm, and the thickness of each internal electrode layer was 1.0 µm.

Sample 1 of the multilayer ceramic capacitor I was not reduced even by firing in a reducing atmosphere, and nickel used for the internal electrodes was not oxidized to an extent which caused IR failure.

### (Preparation of Samples 2 to 17)

Samples 2 to 17 of the multilayer ceramic capacitor I were prepared by the same method as that for preparing Sample 1 except that the composition of the dielectric ceramic composition raw material I was changed to each of the compositions shown in Table 1.

Each of the samples of the multilayer ceramic capacitor I was not reduced even by firing in a reducing atmosphere, and nickel used for the internal electrodes was not oxidized to an extent which caused IR failure.

### (Preparation of Samples 18 to 40)

Samples 18 to 40 of the multilayer ceramic capacitor II were prepared by the same method as that for preparing Sample 1 except that the composition of the dielectric ceramic composition raw material II was changed to each of the compositions shown in Table 2.

Each of the samples of the multilayer ceramic capacitor II was not reduced even by firing in a reducing atmosphere, and nickel used for the internal electrodes was not oxidized to an extent which caused IR failure.

### (Preparation of Comparative Sample 1)

Comparative Sample 1 of the multilayer ceramic capacitor was prepared by the same method as that for preparing Sample 1 except that the composition of the dielectric ceramic composition raw material was changed to that shown in Table 2.

### (Method for evaluating characteristics and results)

With respect to each of Samples 1 to 17 of the multilayer ceramic capacitor I, Table 1 shows the ratio (A/B) of the number of moles A of the second sub-component, which showing the ratio of the sintering aid added, to the total number of moles B of the fourth and fifth sub-components, and the results of measurement and evaluation of MTTF (mean time to failure). In the present invention, Rank-A (MTTF of 10 hours or more) and Rank-B (MTTF of less than 10 hours) are used as evaluation critera.

With respect to each of Samples 1, 18 to 40, and Comparative Sample 1 of the multilayer ceramic capacitor II, Table 2 shows the ratio (C/D) of the number of moles C of Si atoms in the second sub-component to the total number of moles D of the atoms in first to seventh sub-components excluding Si atoms and oxygen atoms in the dielectric ceramic composition, and the total number of moles the fourth and fifth sub-components. Table 2 also shows the results of measurement and evaluation of MTTF (mean time to failure) and m value (lifetime variation). In the present invention, include Rank-A (MTTF of 10 hours or more) and Rank-B (MTTF of less than 10 hours) are used as evaluation criteria for MTTF, and Rank-A (m value of 2.9 or more) and Rank-B (m value of less than 2.9) are used as evaluation criteria for the m value.

The MTTF (mean time to failure) is shown by a mean lifetime (hour: hr) calculated from a Weibull function on the basis of the results of a high accelerator life test (HALT) at an atmospheric temperature of 200°C with the applied voltage of 15 V/µm. The m value is shown by an inclination of a regression line in a Weibull distribution.

The capacitance-temperature characteristics were also measured. The capacitance-temperature characteristics of each of the prepared samples were evaluated by measuring a range of change (%) of capacitance at a temperature of 150°C at which the capacitance-temperature characteristics most degrade within the temperature range of -55°C to 150°C. The capacitance was measured by a LCR meter under the conditions of a frequency of 1 kHz and an input signal level of 1 Vrms. The results of measurement were evaluated by deciding whether or nor the X8R characteristic (ΔC/C = ±15% at -55°C to 150°C) was satisfied. When the X8R characteristic was satisfied, the characteristics were evaluated as Rank-A, and when the X8R characteristic was not satisfied, the characteristics were evaluated as Rank-C. The results are shown in Table 1 and 2. Samples 1 to 17 and 18 to 40 show a rate of change in capacitance of 15% or less, and it was thus confirmed that the X8R characteristic is satisfied.

The results shown in Table 1 indicate that Samples 2 to 9 among Samples 1 to 17 show a MTTF of 10 hours or more and good results. On the other hand, Samples 10 to 17 show a MTTF of less than 10 hours.

The results shown in Table 2 indicate that Samples 20 to 29 having a C/D ratio of 0.2 or more show large MTTF, as compared with the other samples having a C/D ratio of less than 0.2. Namely, the samples having a C/D ratio of less than 0.2 show a MTTF or 15 hours or less, while Samples 20 to 29 having a C/D ratio of 0.2 or more show a MTTF or 18 hours or more. Therefore, a significant difference is observed between both types of samples.

With respect to the m value, Samples 20 to 23, 25, and 27 to 29 among Samples 20 to 29 showing a MTTF of 18 hours or more show an m value of 2.9 or more. It was thus confirmed that the multilayer ceramic capacitor II has a small variation in lifetime.

As shown in Table 2, Comparative Sample 1 having a total of the first and fifth sub-components of 2.0 moles shows a MTTF of 4 hours.

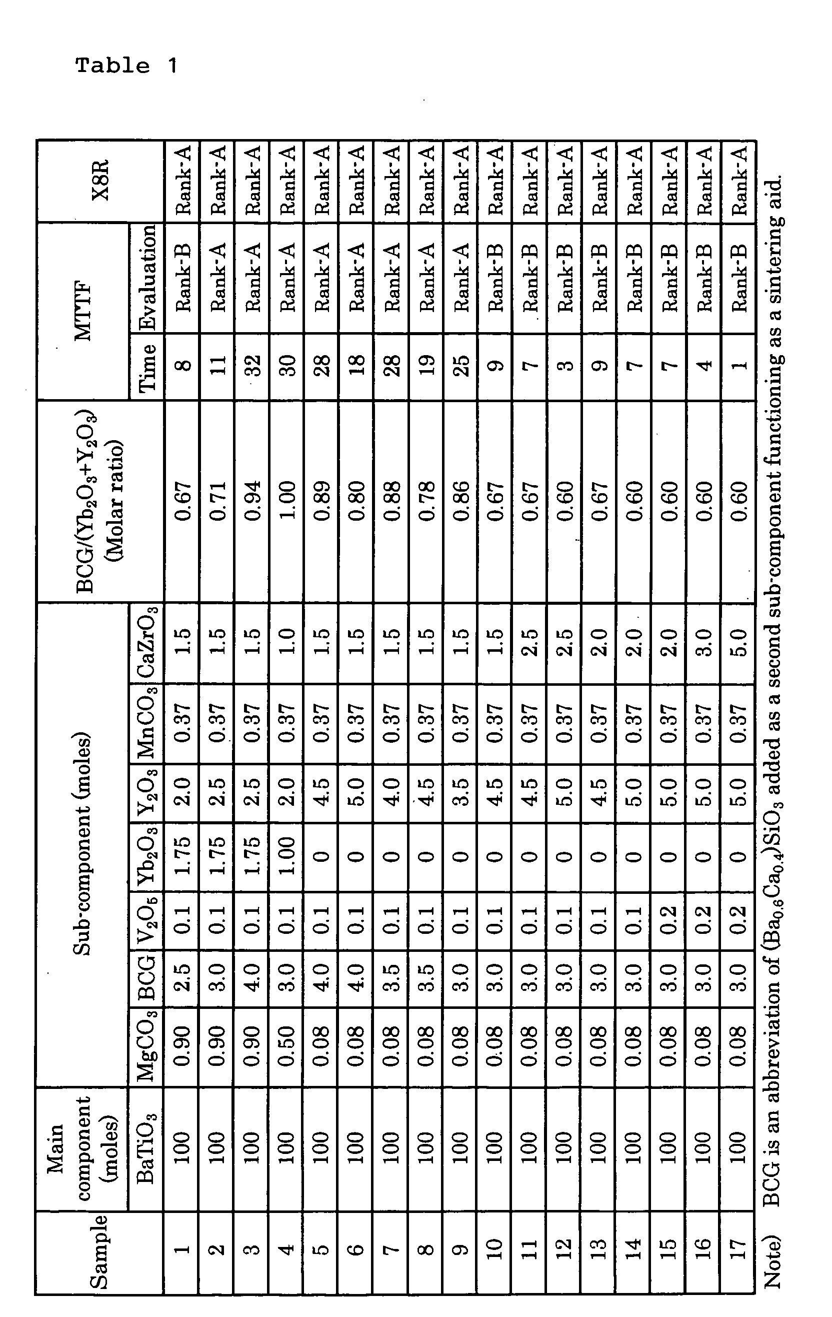

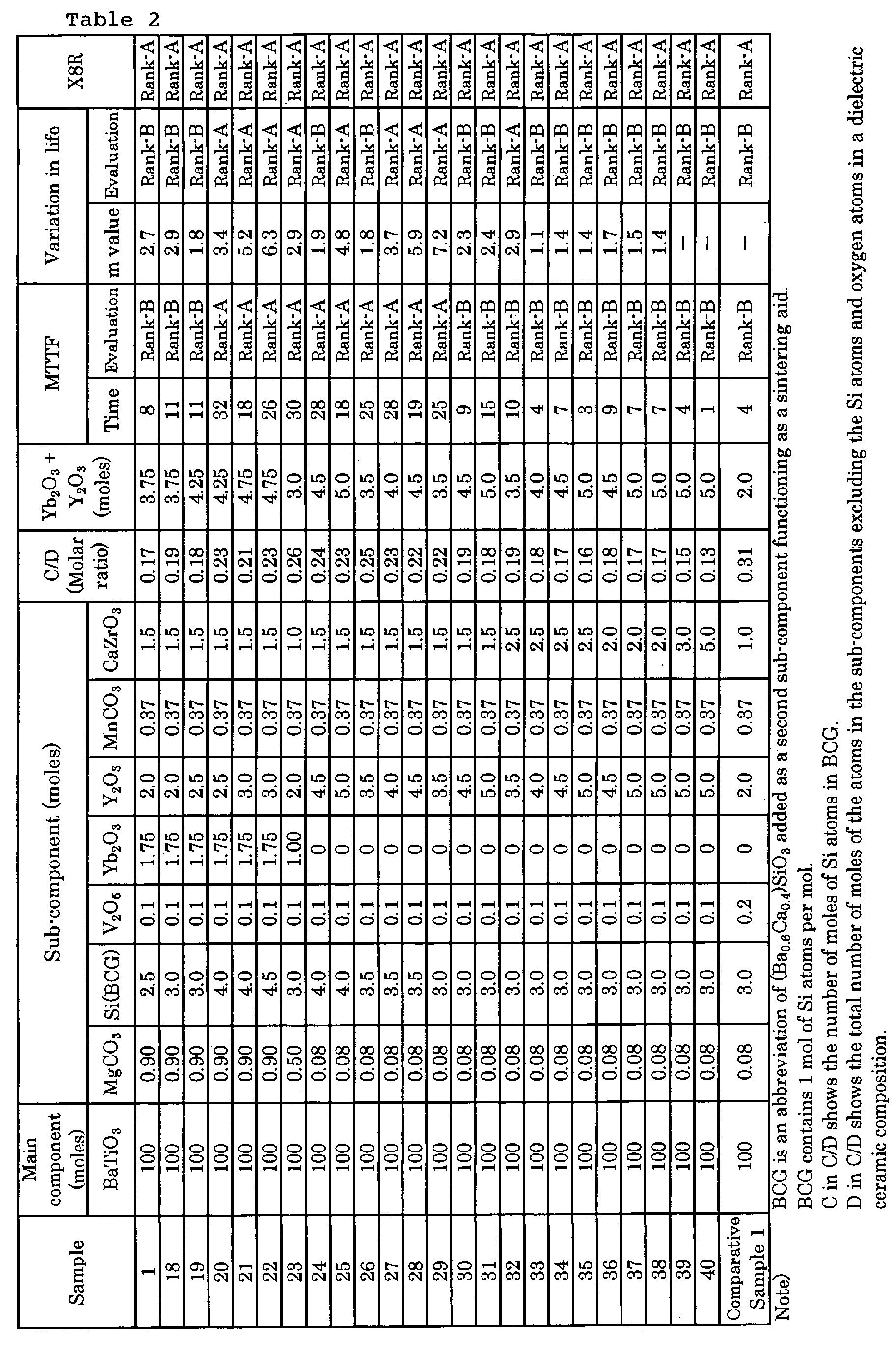

## Claims

1. A dielectric ceramic composition comprising components, with respective numbers of moles relative to 100 moles of barium titanate, including (a) barium titanate, (b) a first sub-component comprising at least one oxide selected from a Mg oxide, a Ca oxide, a Ba oxide, and Sr oxide with a number of moles of 0 to 7 in terms of MgO, CaO, BaO, and SrO, respectively, (c) a second sub-component comprising an oxide containing 1 mol of Si atoms per mol with a number of moles of 0.5 to 12 in terms of the oxide, (d) a third sub-component comprising at least one oxide selected from a V oxide, a Mo oxide, and a W oxide with a number of moles of 0.01 to 0.5 in terms of V₂O₅, MoO₃, WO₃, respectively, (e) a fourth sub-component comprising at least one R¹ oxide (wherein R¹ is at least one selected from Sc, Er, Tm, Yb, and Lu) with a number of moles of 0 to 7 in terms of R¹₂O₃, (f) a fifth sub-component comprising at least one R² oxide (wherein R² is at least one selected from Y, Dy, Ho, Tb, Gd, and Eu) with a number of moles of 0.5 to 9 in terms of R²₂O₃, (g) a sixth sub-component comprising at least one selected from a Mn oxide and a Cr oxide with a number of moles of 0 to 0.5 in terms of MnO and Cr₂O₃, respectively, and (h) a seventh sub-component comprising at least one selected from calcium zirconate and a mixture of a Ca oxide and Zr oxide with a number of moles of 0 to 5 in terms of CaZrO₃ and CaO+ZrO₃, respectively,
wherein the ratio (A/B) of the number of moles A of the second sub-component to the total number of moles B of the fourth and fifth sub-components is 0.7 or more.

2. The dielectric ceramic composition according to claim 1, wherein the second sub-component is a compound oxide represented by (Ba, Ca)ₓSi₂₊ₓ, and the number of moles of the compound oxide is 2 to 10.

3. A multilayer ceramic capacitor comprising a laminate of dielectric layers comprising the dielectric ceramic composition according to claim 1 and internal electrode layers, the layers being alternately stacked.

4. A dielectric ceramic composition comprising components in respective number of moles relative to 100 moles of barium titanate, the component including (a) barium titanate, (b) a first sub-component comprising at least one oxide selected from a Mg oxide, a Ca oxide, a Ba oxide, and Sr oxide with a number of moles of 0 to 7 in terms of MgO, CaO, BaO, and SrO, respectively, (c) a second sub-component comprising an oxide containing 1 mol of Si atoms per mol with a number of moles of 0.5 to 12 in terms of the oxide, (d) a third sub-component comprising at least one oxide selected from a V oxide, a Mo oxide, and a W oxide with a number of moles of 0.01 to 0.5 in terms of V₂O₅, MoO₃, WO₃, respectively, (e) a fourth sub-component comprising at least one R¹ oxide (wherein R¹ is at least one selected from Sc, Er, Tm, Yb, and Lu) with a number of moles of 0 to 7 in terms of R¹₂O₃, (f) a fifth sub-component comprising at least one R² oxide (wherein R² is at least one selected from Y, Dy, Ho, Tb, Gd, and Eu) with a number of moles of 0.5 to 9 in terms of R²₂O₃, (g) a sixth sub-component comprising at least one selected from a Mn oxide and a Cr oxide with a number of moles of 0 to 0.5 in terms of MnO and Cr₂O₃, respectively, and (h) a seventh sub-component comprising at lease one selected from calcium zirconate and a mixture of a Ca oxide and Zr oxide with a number of moles of 0 to 5 in terms of CaZrO₃ and CaO+ZrO₃, respectively,
wherein the ratio (C/D) of the number of moles C of the Si atoms in the second sub-component to the total number of moles D of the atoms in the first to the seventh sub-components excluding the Si atoms and oxygen atoms is 0.2 or more, and the total number of moles of the fourth and fifth sub-components is 3 or more.

5. The dielectric ceramic composition according to claim 4, wherein the ratio (C/D) of the number of moles C of the Si atoms in the second sub-component to the total number of moles D of the atoms in the first to the seventh sub-components excluding the Si atoms and oxygen atoms is 0.2 or more and less than 0.24.

6. A multilayer ceramic capacitor comprising a laminate of dielectric layers comprising the dielectric ceramic composition according to claim 4 and internal electrode layers, the layers being alternately stacked.

7. A method for manufacturing a multilayer ceramic capacitor comprising:
a step of preparing a dielectric ceramic composition raw material comprising basic components including (1) barium titanate and/or a compound or a mixture converted to barium titanate by firing, (2) a first sub-component comprising at least one oxide selected from MgO, CaO, BaO, and SrO and/or a compound converted to the oxide by firing, (3) a second sub-component comprising an oxide containing 1 mol of Si atoms per mol, (4) a third sub-component comprising at least one oxide selected from V₂O₅, MoO₃, WO₃ and/or a compound converted to the oxide by firing, (5) a fourth sub-component comprising at least one oxide represented by R¹₂O₃ (wherein R¹ is an element from Sc, Er, Tm, Yb, and Lu) and/or a compound converted to the oxide by firing, (6) a fifth sub-component comprising at least one oxide represented by R²₂O₃ (wherein R² is at least one selected from Y, Dy, Ho, Tb, Gd, and Eu) and/or a compound converted to the oxide by firing, (7) a sixth sub-component comprising at least one oxide selected from MnO and Cr₂O₃ and/or a compound converted to the oxide by firing, and (8) a seventh sub-component comprising at least one compound selected from CaZrO₃, a mixture of CaO and ZrO₂, a compound converted to CaZrO₃ by firing, and a mixture of compounds converted to CaO and ZrO₂, respectively, by firing, the numbers of moles of the first, second, third, fourth, fifth, sixth, and seventh sub-components relative to 100 moles of the barium titanate being 0 to 7, 0.5 to 12, 0.01 to 0.5, 0 to 7, 0.5 to 9, 0 to 0.5, and 0 to 5, respectively, in terms of the respective oxides, and the ratio (A/B) of the number of moles A of the second sub-component to the total number of moles B of the fourth and fifth sub-components being 0.7 or more;
a step of firing a laminate produced by alternately stacking green sheets for forming dielectric layers and paste layers for forming internal electrode layers, the green sheets being formed using the dielectric ceramic composition raw material, to form a ceramic chip in which the green sheets become the dielectric layers, and the paste layers become the internal electrode layers; and
a step of re-oxidizing the dielectric layers in the ceramic chip.

8. The method for manufacturing a multilayer ceramic capacitor according to claim 7, wherein the second sub-component is a compound oxide represented by (Ba, Ca)ₓSiO₂₊ₓ, and has a number of moles of 2 to 10.

9. A method for manufacturing a multilayer ceramic capacitor comprising:
a step of preparing a dielectric ceramic composition raw material comprising components including (1) barium titanate and/or a compound or a mixture converted to barium titanate by firing, (2) a first sub-component comprising at least one oxide selected from MgO, CaO, BaO, and SrO and/or a compound converted to the oxide by firing, (3) a second sub-component comprising an oxide containing 1 mol of Si atoms per mol, (4) a third sub-component comprising at least one oxide selected from V₂O₅, MoO₃, WO₃ and/or a compound converted to the oxide by firing, (5) a fourth sub-component comprising at least one oxide represented by R¹₂O₃ (wherein R¹ is an element from Sc, Er, Tm, Yb, and Lu) and/or a compound converted to the oxide by firing, (6) a fifth sub-component comprising at least one oxide represented by R²₂O₃ (wherein R² is at least one selected from Y, Dy, Ho, Tb, Gd, and Eu) and/or a compound converted to the oxide by firing, (7) a sixth sub-component comprising at least one oxide selected from MnO and Cr₂O₃ and/or a compound converted to the oxide by firing, and (8) a seventh sub-component comprising at least one compound selected from CaZrO₃, a mixture of CaO and ZrO₂, a compound converted to CaZrO₃ by firing, and a mixture of compounds converted to CaO and ZrO₂, respectively, by firing, the numbers of moles of the first, second, third, fourth, fifth, sixth, and seventh sub-components relative to 100 moles of the barium titanate being 0 to 7, 0.5 to 12, 0.01 to 0.5, 0 to 7, 0.5 to 9, 0 to 0.5, and 0 to 5, respectively, in terms of the respective oxides, the ratio (C/D) of the number of moles C of Si atoms in the second sub-component to the total number of moles of the atoms in the first to seventh sub-components excluding the Si atoms and oxygen atoms being 0.2 or more, and the total number of moles of the fourth and fifth sub-components being 3 or more;
a step of firing a laminate produced by alternately stacking green sheets for forming dielectric layers and paste layers for forming internal electrode layers, the green sheets being formed using the dielectric ceramic composition raw material, to form a ceramic chip in which the green sheets become the dielectric layers, and the paste layers become the internal electrode layers; and
a step of re-oxidizing the dielectric layers in the ceramic chip.

10. The method for manufacturing a dielectric ceramic composition according to claim 9, wherein the ratio (C/D) of the number of moles C of the Si atoms in the second sub-component to the total number of moles D of the atoms in the first to the seventh sub-components excluding the Si atoms and oxygen atoms is 0.2 or more and less than 0.24.

11. A dielectric ceramic composition raw material comprising basic components including (1) barium titanate and/or a compound or a mixture converted to barium titanate by firing, (2) a first sub-component comprising at least one oxide selected from MgO, CaO, BaO, and SrO and/or a compound converted to the oxide by firing, (3) a second sub-component comprising an oxide containing 1 mol of Si atoms per mol, (4) a third sub-component comprising at least one oxide selected from V₂O₅, MoO₃, WO₃ and/or a compound converted to the oxide by firing, (5) a fourth sub-component comprising at least one oxide represented by R¹₂O₃ (wherein R¹ is an element from Sc, Er, Tm, Yb, and Lu) and/or a compound converted to the oxide by firing, (6) a fifth sub-component comprising at least one oxide represented by R²₂O₃ (wherein R² is at least one selected from Y, Dy, Ho, Tb, Gd, and Eu) and/or a compound converted to the oxide by firing, (7) a sixth sub-component comprising at least one oxide selected from MnO and Cr₂O₃ and/or a compound converted to the oxide by firing, and (8) a seventh sub-component comprising at least one compound selected from CaZrO₃, a mixture of CaO and ZrO₂, a compound converted to CaZrO₃ by firing, and a mixture of compounds converted to CaO and ZrO₂, respectively, by firing, the numbers of moles of the first, second, third, fourth, fifth, sixth, and seventh sub-components relative to 100 moles of the barium titanate being 0 to 7, 0.5 to 12, 0.01 to 0.5, 0 to 7, 0.5 to 9, 0 to 0.5, and 0 to 5, respectively, in terms of the respective oxides, and the ratio (A/B) of the number of moles A of the second sub-component to the total number of moles B of the fourth and fifth sub-components being 0.7 or more.

12. A dielectric ceramic composition raw material comprising basic components including (1) barium titanate and/or a compound or a mixture converted to barium titanate by firing, (2) a first sub-component comprising at least one oxide selected from MgO, CaO, BaO, and SrO and/or a compound converted to the oxide by firing, (3) a second sub-component comprising an oxide containing 1 mol of Si atoms per mol, (4) a third sub-component comprising at least one oxide selected from V₂O₅, MoO₃, WO₃ and/or a compound converted to the oxide by firing, (5) a fourth sub-component comprising at least one oxide represented by R¹₂O₃ (wherein R¹ is an element from Sc, Er, Tm, Yb, and Lu) and/or a compound converted to the oxide by firing, (6) a fifth sub-component comprising at least one oxide represented by R²₂O₃ (wherein R² is at least one selected from Y, Dy, Ho, Tb, Gd, and Eu) and/or a compound converted to the oxide by firing, (7) a sixth sub-component comprising at least one oxide selected from MnO and Cr₂O₃ and/or a compound converted to the oxide by firing, and (8) a seventh sub-component comprising at least one compound selected from CaZrO₃, a mixture of CaO and ZrO₂, a compound converted to CaZrO₃ by firing, and a mixture of compounds converted to CaO and ZrO₂, respectively, by firing, the number of moles of the first, second, third, fourth, fifth, sixth, and seventh sub-components relative to 100 moles of the barium titanate being 0 to 7, 0.5 to 12, 0.01 to 0.5, 0 to 7, 0.5 to 9, 0 to 0.5, and 0 to 5, respectively, in terms of the respective oxides, the ratio (C/D) of the number of moles C of Si atoms in the second sub-component to the total number of moles of the atoms in the first to seventh sub-components excluding the Si atoms and oxygen atoms being 0.2 or more, and the total number of moles of the fourth and fifth sub-components being 3 or more.
